Europäisches Patentamt

European Patent Office

Office européen des brevets

(19)

(11) Veröffentlichungsnummer: **0 146 818**
**A2**

# (12) EUROPÄISCHE PATENTANMELDUNG

(21) Anmeldenummer: **84114487.6**

(22) Anmeldetag: **29.11.84**

(51) Int. Cl.⁴: **H 02 P 7/64**
**H 01 F 29/14**

(30) Priorität: **29.11.83 DE 3343202**

(43) Veröffentlichungstag der Anmeldung:
**03.07.85 Patentblatt 85/27**

(84) Benannte Vertragsstaaten:
**AT BE CH DE FR GB IT LI LU NL SE**

(71) Anmelder: **Holec GmbH**
**Rheinstrasse 32**
**D-6100 Darmstadt(DE)**

(72) Erfinder: **Fröhlich, Günter, Elektro-Ing.**
**Buchenstrasse 30**
**D-5828 Ennepetal(DE)**

(74) Vertreter: **Zeitler, Giselher**
**Postfach 26 02 51**
**D-8000 München 26(DE)**

(54) **Magnetverstärker und Schaltung zur Drehzahlsteuerung oder -regelung von Motoren und Verwendung derselben.**

(57) Zur Drehzahlsteuerung oder -regelung von Motoren mit wenigstens annähernd dreieckiger Drehmomentkennlinie $M_d = f(n)$, insbesondere für Mehrphasenmotoren mit Widerstandsläufer wird vorgeschlagen, einen in Selbstsättigungsschaltung betreibbaren Magnetverstärker einzusetzen, bei dem erfindungsgemäß der ferromagnetische Kern (4) einen ersten Kernteil (7) mit einem zur Selbsttätigungausreichend kleinem magnetischen Widerstand (Luftspalt 9') und einen zweiten Kernteil (8) mit größerem, zur Selbstsättigung nicht ausreichendem magnetischen Widerstand (Kernluftspalt 9) aufweist. Hierdurch kann eine wenigstens annähernd rechteckige Drehmomentkennlinie erhalten werden, so daß ein relativ sanftes, zügiges Anfahren und Hochfahren bis zur Nenndrehzahl möglich ist und auch keine Drehzahlpendelungen auftreten.

Fig. 8

EP 0 146 818 A2

Magnetverstärker und Schaltung zur Drehzahlsteuerung
oder -regelung von Motoren und Verwendung derselben.

Die vorliegende Erfindung bezieht sich auf einen
Magnetverstärker gemäß dem Oberbegriff des Anspruchs 1
und eine Schaltung zur Drehzahlsteuerung oder -regelung
von Widerstandsläufermotoren mit einem derartigen Magnetverstärker, sowie auf eine Verwendung derselben für
Antriebe.

Magnetverstärker dienen bekanntlich unter anderem zur
Steuerung oder Regelung der Drehzahl von Drehstrommotoren. In der Regel werden dabei Kurzschlußläufermotoren verwendet. Drehstrommotor-Antriebe für Drehwerke oder Fahrwerke müssen besondere Bedingungen erfüllen, da einerseits das auf die Motorwelle reduzierte Trägheitsmoment dieser Geräte sehr hoch ist, (meist
mehr als das 10-fache des Motoreigenträgheitsmomentes),
und andererseits, wegen der Schwingneigung zu einer
Frequenz um 1 Hz herum, ein sanfter und vor allem gleichförmiger Anlauf erforderlich ist. Als Nebenforderung
wird ein robuster wartuhgsfreier Antrieb verlangt,
das gilt insbesondere auch dann, wenn der Antrieb in
seiner Drehzahl gesteuert (oder geregelt) werden soll.

Die hohen Trägheitsmomente und die Vielzahl der pro
Stunde geforderten Anläufe ergeben für den Drehstrommotor ein beachtliches Wärmeproblem, da wegen der
geforderten Robustheit  nur Kurzschlußläufer in Frage
kommen. Durch sorgfältige Motordimensionierung und

2081

- 2 -                    0146818

Einsatz eines Widerstandsläufers läßt sich dieses Problem beherrschen. Es ergibt sich für den Motor dann jedoch eine "dreieckige" Anlaufmomentkennlinie.

Die Beschleunigung des angetriebenen Gerätes setzt sehr stark ein und wird mit steigender Geschwindigkeit immer geringer, wobei dann die Nenndrehzahl stark lastabhängig wird.

Das ist nicht immer wünschenswert, außerdem kann durch diesen Verlauf eine Schwingung eingeleitet werden.

Für den erwünschten Antrieb wäre daher eine Drehmoment-Kennlinie mit einem rechteckigen Verlauf sehr gut geeignet. Hierbei wäre nämlich die Beschleunigung bis nahezu zur Nenndrehzahl konstant und diese wiederum liegt in vernünftiger Relation zu einem üblichen geringen Schlupf. Mit einem normal dimensionierten Widerstandsläufer läßt sich eine derartige Kurve wegen des auftretenden Wärmeproblems nicht realisieren. Normale Kurzschlußläufermotoren und auch an sich bekannte Doppelnutläufer sind wegen der in der Anlaufphase auftretenden Einsattelung der Drehmomentkurve und der dadurch bedingten Schwingneigung nicht einsetzbar, wenn sie nicht weit überdimensioniert werden sollen, was aus wirtschaftlichen Betrachtungen nicht erstrebenswert ist.

Mit der vorliegenden Erfindung soll daher die Aufgabe gelöst werden, eine Drehzahlsteuerung oder -regelung eines Motors mit Widerstandsläufer so vorzuneh-

2081

men, daß mit einer robusten, rauhen Betrieb standhaltenden Steuerung der Motor mit einem nicht zu stark überhöhten Drehmoment, also relativ sanft anlaufen und mit wenigstens annähernd konstanter Beschleunigung hochgefahren werden kann und dabei Drehzahlpendelungen auch während des Betriebs vermeidet.

Erfindungsgemäß wird dies durch einen Magnetverstärker erreicht, der die Merkmale des Kennzeichens des Anspruchs 1 aufweist. Hierdurch kann die Anfahrspitze der dreieckigen Drehmomentkurve von Widerstandsläufern abgeflacht und zumindest in der Anlaufphase ein unter Umständen fast rechteckiger Kurvenverlauf erhalten werden.

Weitere vorteilhafte Einzelheiten des erfindungsgemäßen Magnetverstärkers sowie eine geeignete Schaltung zur Drehzahlsteuerung oder-regelung sowie eine vorteilhafte Anwendung bei einem Antrieb sind in den Unteransprüchen angegeben und nachfolgend anhand der in der Zeichnung veranschaulichten Ausführungsbeispiele beschrieben.

Dabei zeigen:

Fig. 1 die Drehmomentkurve $M_d = f(n)$ eines Kurzschlußläufermotors und gestrichelt eine mit einem Widerstandsläufer realisierbare Drehmomentkurve $M_d = f(n)$,

Fig. 2 eine erwünschte rechteckige Drehmomentkurve $M_d = f(n)$,

- 4 -

0146818

Fig. 3 das Prinzipschaltbild eines stromgesteuerten Magnetverstärkers,

Fig. 4 die Änderung einer dreieckigen Drehmomentkennlinie bei Steuerung durch
stromgesteuerte Magnetverstärker,

Fig. 5 das Prinzipschaltbild eines spannungsgesteuerten Magnetverstärkers,

Fig. 6 die Änderung einer dreieckigen Drehmomentkennlinie bei Steuerung durch einen
spannungsgesteuerten Magnetverstärker,
die

Fig. 7 und 8 je einen möglichen Schaltaufbau
des ferromagnetischen Kerns der Regeldrosseln des erfindungsgemäßen Magnetverstärkers,

Fig. 9 die mit dem Magnetverstärker aus der
"Dreieckkurve" erzielbare "Rechteckform",

Fig.10 die Drehmomentkennlinien bei Regelung
durch den Magnetverstärker,

Fig.11 die dabei sich einstellende Ausgangsspannung,

Fig.12 eine Schaltung zur Drehzahlsteuerung
eines Drehstrom-Widerstandsläufer-Motors
und

Fig.13 eine Prinzipschaltung mit Drehrichtungsumkehr.

2081

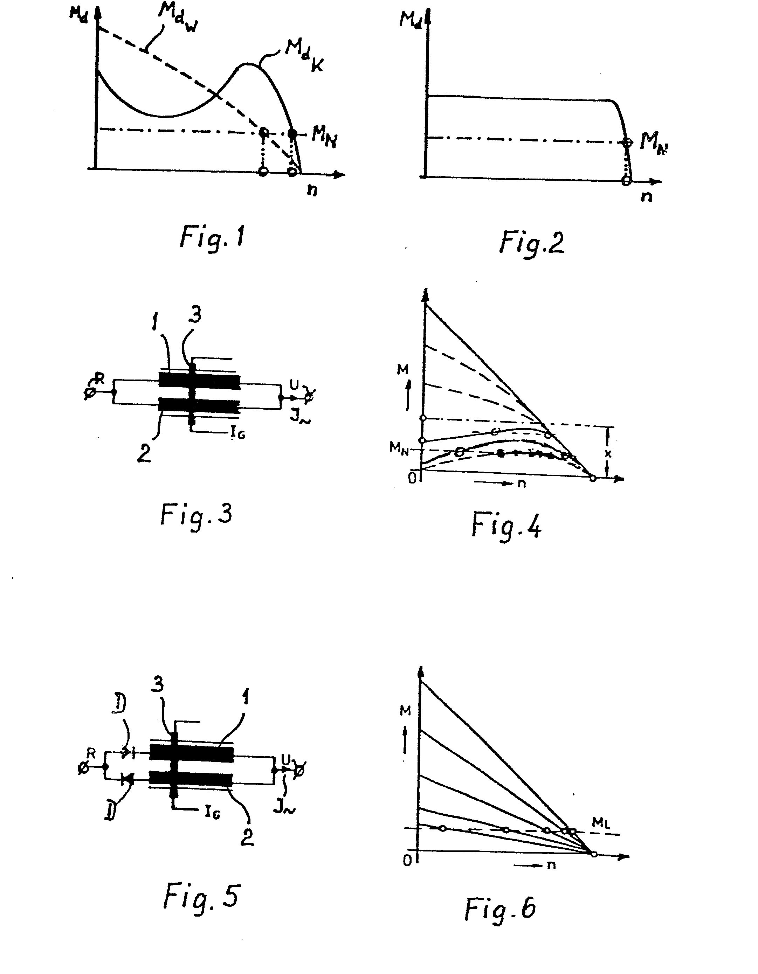

In Fig. 1 ist mit $M_{dK}$ die bekannte Drehmomentkennlinie $M_d = f(n)$ eines Drehstromkurzschlußläufermotors
bezeichnet. Diese besitzt die bekannte Einsattelung
im Anfahrbereich. Wenn daher das Lastmoment größer
ist als das Minimum der Einsattelung, dann kommt der
Motor nicht in seinen Nenndrehzahlbereich und er
erreicht dort auch nicht sein Nenndrehmoment $M_N$. Der
steile Abfall der Drehmomentkurve im Nenndrehzahlbereich zeigt, daß die Drehzahl dort relativ lastunabhängig ist, was in den meisten Fällen sehr erwünscht
ist.

Die in Fig. 1 gestrichelte Kurve stellt die mögliche
Drehmomentkennlinie $M_{dW} = f(n)$ eines Mehrphasenmotors
mit Widerstandsläufer dar. Hier wird also beim Anfahren eine sehr hohe Beschleunigung erreicht, die
mit zunehmender Drehzahl abnimmt. Da die Kurve bei
annähernd gleichen Anfahrmomenten wesentlich weniger
steil ist als diejenige eines Kurzschlußläufermotors,
ist die Drehzahl immer wesentlich lastabhängiger.
Dieser Effekt ist meist, insbesondere bei Antrieben
von Kranen, Fahrwerken etc., unerwünscht, zumal es
hierbei zu Schwingungen, d.h. zur Drehzahlpendelung
kommen kann.

Die Fig. 2 zeigt eine Drehmomentkennlinie $M_d = f(n)$,
die für die meisten Antriebe der genannten Arten am
besten geeignet wäre. Hierbei würde die Last bis zum
Nenndrehzahlbereich gleichmäßig beschleunigt. Die
Last wird dabei relativ sanft jedoch zügig von Null
auf höchste Bewegungsgeschwindigkeit beschleunigt und
die Drehzahl ist im Nenndrehzahlbereich wegen des
steilen Abfalls der Drehmomentkennlinie ziemlich
lastunabhängig.

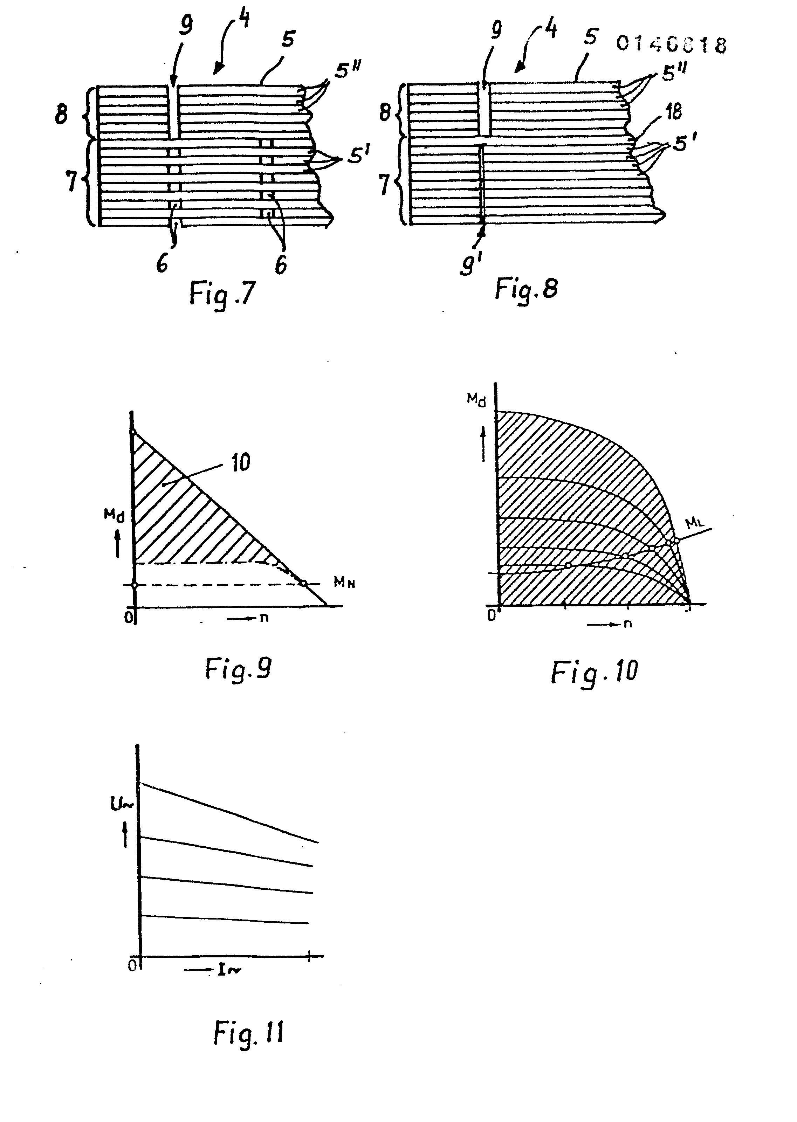

Dieser Kennlinie kommt die etwa dreieckige Kennlinie des Widerstandsläufers am nächsten. Man könnte sie sich so entstanden denken, daß bei einer stark negativ verlaufenden dreieckigen Kennlinie die Anfangsspitze (vgl. Fig.9) abgeschnitten ist.

Im folgenden wird daher kurz gezeigt, welche Möglichkeiten der Drehzahlregelung eines Widerstandsläufers mit den bekannten Magnetverstärkern möglich ist. Dabei zeigt die Fig. 3 das Prinzipschaltbild eines sogenannten stromsteuernden Magnetverstärkers für eine Phase. Er besteht aus zwei antiparallel geschalteten Regeldrosseln 1 und 2. Beide Regeldrosseln 1 und 2 sind bekanntlich mit einer gemeinsamen oder je einer auf dem Eisenkern der Regeldrosseln angeordneten, jedoch gleichsinnig zusammengeschalteten Steuerwicklung 3 versehen, in der also trotz Antiparallelschaltung der Regeldrosseln 1 und 2 keine Spannung induziert wird. An die Steuerwicklung 3 wird eine Steuergleichspannung angeschlossen. Um eine Steuerung oder Regelung des Stromes $J_\sim$ zu ermöglichen, muß die durch die Steuergleichspannung erzeugte Durchflutung der jeweils vorhandenen Wechselstromdurchflutung analog eingestellt werden. Daher muß die Hälfte des Wickelraumes der Regeldrosseln für die Gleichstromwicklung benutzt werden. Das bedeutet hohe Gleichstromerregerleistung und geringere Wechselstromdurchgangsleistung, da ja auch für die Wechselstromwicklung nur die Hälfte des Wickelraumes da ist. Daraus erklärt sich auch der kleinere (z.B. 70-fache ) Verstärkungsgrad dieses Typs. Nachteilig ist auch, daß seine Sperrung nur durch den Leerlauf-

ZOBF

widerstand bedingt ist. Löschwicklungen sind nicht
möglich. Setzt man je einen solchen Magnetverstärker in jede Netzphase R, S, T etc. zu einem Motor
mit den Anschlüssen U, V, W mit einer dreieckigen
Drehmomentkennlinie, dann ergeben sich, da der fliessende Strom konstant zu bleiben versucht, die in
Fig. 4 dargestellten sehr ungünstigen Kennlinien. Daraus ist ersichtlich, daß mit kleineren Anfangsdrehmomenten eine Art Spitzenbeschneidung auftritt. Das
liegt daran, daß, wenn beispielsweise der 2-fache
Nennstrom eingestellt ist, im Anlauf natürlich an
Stelle des z.B. 5-fachen Nennstromes des Motors
auch nur der 2-fache vorhanden ist. Da das Anfangsdrehmoment $M_A$ quadratisch abfällt, ist es nun auf ca.
1/6 abgefallen. In Wahrheit sind die Kennlinien noch
etwas ungünstiger, da der Strom mit steigender Stärke
wieder mehr eine dreieckige Drehmomentkennlinie erzeugt.

Tatsächlich brauchbar wäre nur die strichpunktiert
eingezeichnete Kennlinie mit einem relativ horizontal verlaufenden Anfahrbereich. Da eine solche angenäherte Kennlinie nur in einem ganz kleinen Steuerbereich auftritt, im interessierenden Drehmomentbereich
X jedoch die Anfangsdrehmomente $M_A$ stark abnehmen, ist
eine günstige Drehzahlsteuerung oder -regelung mit
dem stromsteuernden Magnetverstärker nicht möglich.

Betrachtet man nun die Verhältnisse bei Anwendung
eines spannungssteuernden Magnetverstärkers für die
Drehzahlsteuerung oder -regelung eines Motors mit
annähernd dreieckiger Drehmomentkennlinie $M_d = f(n)$ ,
also z.B. eines Mehrphasen-, insbesondere Drehstrommotors mit Widerstandsläufer, so kommt man zu folgendem Ergebnis:

2061

Der in Selbstsättigungsschaltung betriebene spannungssteuernde Magnetverstärker (ebenfalls einphasig dargestellt) ist im Prinzip wie der stromsteuernde, hat
jedoch noch zwei antiparallel zueinander liegende
Dioden D eingefügt. Dadurch werden 2 pulsierende
Gleichströme geführt, die in jedem Zweig einem
Wechselstrom mit verschobener Nullinie entsprechen.
Da man diese Nullinie willkürlich nach "beiden"
Seiten (Plus- und Minus Feldstärke) verschieben kann,
ergibt sich die Möglichkeit von "Löschen " und
"Zünden ", indem der Steuerstrom $I_G$ in der Richtung
umgekehrt wird. Da nur die Magnetisierung beeinflußt wird und nicht die elektrische Wechselstromdurchflutung, wie beim stromsteuernden Magnetverstärker, und dabei eine Selbstsättigung des ferromagnetischen Kerns, in der Regel eines Eisenkerns,
eintritt, kommt man mit äußerst wenig Gleichstromleistung aus. Dabei genügen z.B. ca. 5% des Wickelraumes für die Steuerwicklung und man erhält eine
Verstärkung bis zu 1000-fach. Hierbei wird im
wesentlichen die Ausgangsspannung $U_\sim$ und nicht der
Strom $J_\sim$ gesteuert bzw. geregelt. Um das "Löschen"
und "Zünden" einfacher zu gestalten, d.h. um keine
Umkehr der Steuerspannnung bzw. des Steuerstroms $J_G$
an der Steuerwicklung 3 vornehmen zu müssen, können
auch in bekannter Weise zwei antiparallel gewickelte
Steuerwicklungen vorgesehen sein und jeweils eine
der beiden angesteuert werden.

Schaltet man einen derartigen spannungssteuernden
Magnetverstärker in jede Phase R,S,T eines Mehrphasen, insbesondere Drehstromnetzes, die zu den
Klemmen U,V,W z.B. eines Drehstrommotors mit Widerstandsläufer führt, dann ergeben sich wiederum

2081

ungeeignete Drehmoment-Kennlinien über den zu steuernden oder zu regelnden Bereich. Dies ist anhand der in Fig. 6 dargestellten Kennlinien veranschaulicht. Wie ersichtlich, ist eine Änderung der dreieckigen Kennliniencharakteristik in Richtung zu einer rechteckigen gemäß Fig. 2 nicht möglich. Vielmehr werden nur die Momentenmaßstäbe verändert und die Kurven mehr oder weniger in der Neigung verändert. Anwendbar wäre hier für den Anfahrbereich nur eine sehr flache Kennlinie, da hierbei mit relativ konstantem Lastmoment angefahren werden kann. Allerdings ist dann die Lastabhängigkeit im Nenndrehzahlbereich wieder sehr hoch.

Eine der gewünschten Rechteckform einer Drehmomentkennlinie zumindest angenäherte Drehmomentkennlinie wird bei Anwendung eines Magnetverstärkers zur Drehzahlsteuerung oder-regelung eines Motors mit etwa dreieckiger Drehmomentkennlinie, wie sie z.B. Mehrphasen-, insbesondere Drehstrommotoren mit Widerstandsläufer aufweisen erfindungsgemäß dann erreicht, wenn der ferromagnetische Kern des Magnetverstärkers beziehungsweise der einzelnen Regeldrosseln desselben so ausgebildet ist, daß ein Teil des Kerns einen genügend kleinen magnetischen Widerstand aufweist, sodaß dieser Teil beim Ansteuern mit Gleichstrom zur Selbstsättigung kommt, also einen spannungsteuernden Magnetverstärker darstellt und der andere Teil beziehungsweise der Rest des Kerns einen so großen magnetischen Widerstand aufweist, daß eine Selbstsättigung und damit die spannungssteuernde Eigenschaft nicht eintritt sondern dieser Teil einen stromsteuernden Magnetverstärker darstellt.

Erreicht wird dies in einfacher Weise dadurch, daß der Luftspalt in den einzelnen Kernteilen entsprechend gewählt wird. Beispielsweise erhält man einen solchen Kern 4 gemäß Fig. 7 dadurch, daß man Eisenbleche 5 gleicher Art mit relativ großem Luftspalt 6 von z.B. 0,5 bis 3 mm in einem ersten Kernteil 7 überlappend schichtet. Dadurch wird der magnetische Widerstand klein gehalten und der Betrieb dieses Kernteils 7 in Selbstsättigungsschaltung ermöglicht. Der zweite Kernteil 8 wird dagegen nicht überlappend geschichtet, so daß sich ein entsprechend breiter durchgehender Kernluftspalt 9 bildet. Dieser bewirkt im Kernteil 8 einen so hohen magnetischen Widerstand, daß eine Selbstsättigung wie beim spannungssteuernden Magnetverstärker nicht eintritt. In diesem zweiten Kernteil 8 ist vielmehr die Wechselstromdurchflutung analog der Steuer-Gleichstromdurchflutung, so daß der zweite Kernteil 8 stromsteuernde Eigenschaften aufweist.

Die gleiche Wirkung kann erhalten werden, wenn gemäß Fig. 8 der ferromagnetische Kern 4 aus Eisenblechen geschichtet wird, wobei für den ersten Kernteil 7 Eisenbleche 5' mit einem Luftspalt von nahezu Null nicht überlappend oder überlappend geschichtet werden und für den zweiten Kernteil 8 Eisenbleche 5'' mit einem großen Luftspalt von 0,5 bis 3 mm nicht überlappend geschichtet werden. Hierdurch besitzt der erste Kernteil 7 keinen oder einen für die Herabsetzung des magnetischen Widerstandes praktisch unwirksamen Kernluftspalt 9' und der zweite Kernteil 8 den Kernluftspalt 9 wie gemäß Fig. 7.

0146818

Je nach der Drehmomentkennlinie des verwendeten
Motors und in Abhängigkeit von der Leistung muß
der Anteil des stromsteuernden zweiten Kernteils 8
in der Regel durch Versuch entsprechend gewählt
beziehungsweise an die Gegebenheiten angepaßt werden. Es hat sich gezeigt, daß der Anteil des
zweiten Kernteils 8 etwa 15 bis 30% des Kerns 4
ausmachen muß. In einem Ausführungsbeispiel wurden
gute Ergebnisse mit einem Verhältnis von erstem
Kernteil 7: zweitem Kernteil 8 von 80:20 erhalten,
d.h., 80% der vollen Spannung ergeben 64% des
Anfangsdrehmoments. So konnte zum Beispiel eine
Absenkung des Anfangsdrehmoments $M_A$ von 300 % auf
200 % abgesenkt werden. Bei einem 50 mm starken
Blechpaket ist der erste Kernteil 7 also ca. 40 mm
und der Luftspalt praktisch Null und/oder überlappt und der zweite Kernteil 8 ist etwa 10 mm
stark und der Luftspalt 9 etwa 0,5 bis 3 mm,
insbesondere bis 2 mm. Gegebenenfalls kann zwischen
den beiden Kernteilen 7,8 ein nicht magnetisches
Blech von 0,5 bis 2 mm Stärke zum Beispiel aus
Aluminium, Kupfer etc. eingelegt sein, um eine
Einwirkung des Kernteils 7,8 aufeinander zu vermindern. Auch eine Trennplatte aus Isolierstoff kann
eingelegt werden.

Das Wirkungsprinzip der Absenkung ist in der Fig. 9
veranschaulicht. Der schraffierte Teil 10 der
Kennlinie ist dabei durch Verwendung eines angepaßten erfindungsgemäßen Magnetverstärkers abgeschnitten, sodaß sich die strichpunktierte Kennlinie
ergibt. Tatsächlich erzielbare Steuer- bzw. Regelkennlinien sind in der Fig. 10 dargestellt. Die

2081

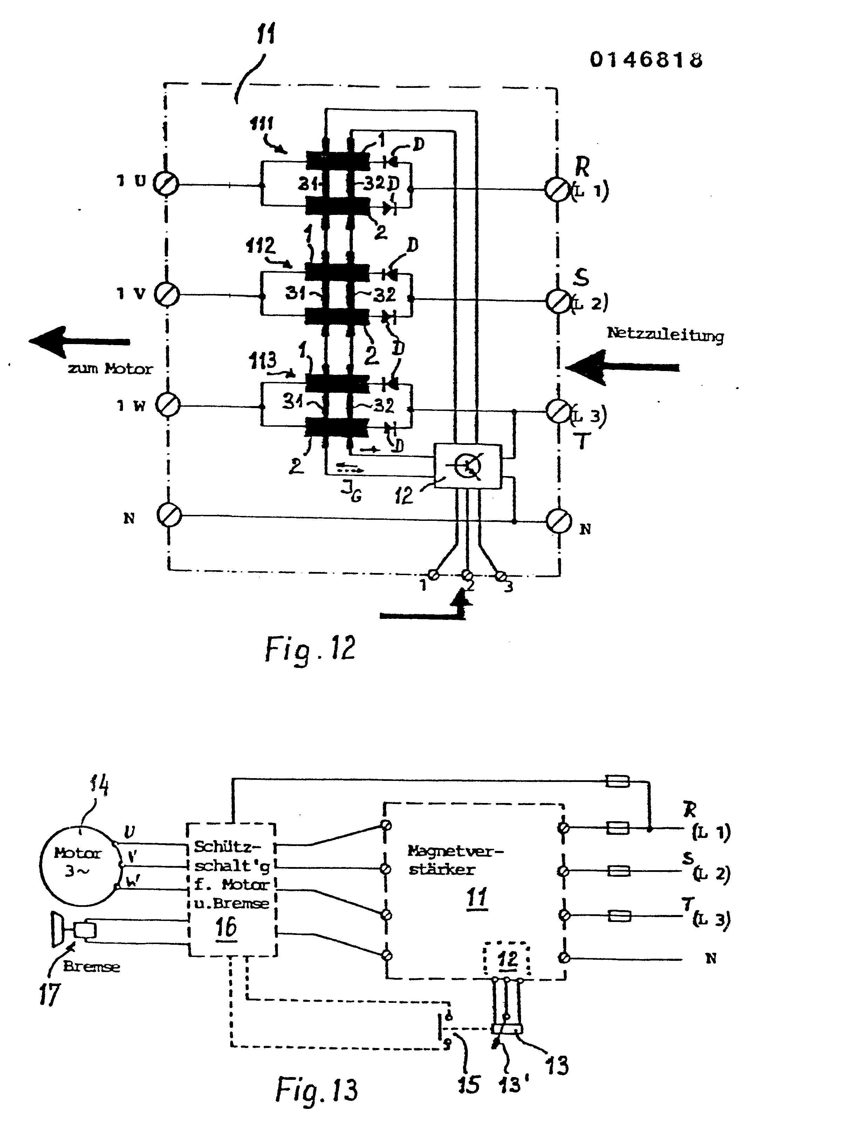

Ausgangsspannung ändert sich dabei beispielsweise wie anhand der Fig. 11 gezeigt, d.h. die Spannung $U_{\sim}$ sinkt etwas mit steigender Drehzahl ab, wie dies bei nur stromsteuerndem Magnetverstärker, jedoch in erheblichem Maß auftritt.

Wegen des Luftspaltes des zweiten Kernteils 8 ist nur eine geringe Einflußnahme des Gleichstromfeldes auf den Blindwiderstand desselben gegeben. Der geringe Einfluß ist jedoch erwünscht, um die .Drehmomentkurve im Anfangsbereich nicht ganz gerade zu halten. Mit steigender Drehzahl nimmt dann dessen Blindwiderstandsanteil relativ gegenüber dem des ersten Kernteils 7 zu, so daß im Nenndrehzahlbereich die stromsteuernde Wirkung hervortritt.

Bei der Auslegung bzw. Anwendung des erfindungsgemäßen Magnetverstärkers ist darauf zu achten, daß normalerweise die Kennlinie im Anfahrbereich immer eine leicht negative Steigung aufweist, damit immer ein stabiler Schnittpunkt mit der Lastmomentkennlinie $M_L$ (Fig. 10 ) erreicht wird.

Aus dem dargelegten Sachverhalt ist ersichtlich, daß durch die Erfindung der harte Anlauf von Motoren gedämpft werden kann, wobei gleichzeitig ein zügi- ges Anfahren bzw. Hochlaufen des Motors gewähr- leistet wird und im Nenndrehzahlbereich eine relativ hohe Lastunabhängigkeit der Drehzahl erreicht wird, so daß Drehzahlpendelungen nicht auftreten können.

Für den ferromagnetischen Kern werden Eisenbleche aus handelsüblichem Dynamoblech verwendet. Es

2081

können jedoch auch Teilkerne aus anderen ferromagnetischen Stoffen, z.B. Ferriten verwendet werden,
z.B. wenn die Regelungen bei höheren Frequenzen durchgeführt werden sollen.

In Fig. 12 ist ein Prinzipschaltbild dargestellt, das
die mögliche Schaltung eines erfindungsgemäßen
Magnetverstärkers 11 zeigt, und zwar für einen Drei-
phasen-Drehstrommotor mit Widerstandsläufer. An die
Netzzuleitungen R,S,T (beziehungsweise allgemein
L 1, L 2, L 3 ) ist je ein einphasiger Magnetverstärker 111,112,113 angeschlossen. Jeder derselben
besteht aus zwei antiparallel geschalteten Regeldrosseln 1 und 2 sowie je einer zu jeder Regeldrossel 1,2 in Reihe liegende Diode D, wobei die
Dioden D eines einphasigen Magnetverstärkers antiparallel zueinander liegen. Die Schaltung entspricht
also derjenigen eines spannungssteuernden Magnetverstärkers. Die Ausgänge r,s,t der einphasigen Magnetverstärker 111,112,113 sind an die Klemmen U,V,W
des Drehstrommotors angeschlossen.

Jeder einphasige Magnetverstärker 111,112,113 besitzt
zwei Steuerwicklungen 31,32, die gegensinnig zueinander gewickelt sind und über einen steuerbaren
Gleichstrom eines gemeinsamen elektronischen Steuergliedes 12 mit dem Steuer-Gleichstrom $J_\sim$ versorgt
werden. Das Steuerglied 12 ist ein Transistorverstärker, der über ein an den Eingängen E 1, E 2, E 3
angeschlossenes Stellglied 13, zum Beispiel ein
Potentiometer (Fig. 13 ). Durch Verwendung eines
Potentiometers kann bei entsprechender Schaltung
der Mittelabgriff 13' auch zur Spannungsumpolung
dienen. Diese Transistorstufe kann stark überdimen-

2081

sioniert werden, damit sie den zum Beispiel auf Baustellen robusten Betrieb und Betriebsbedingungen auf Dauer standhält. Diese Überdimensionierung ist bezüglich der Kosten und der Verlustwärme etc. leicht vertretbar. Die notwendige Steuerleistung betrug zum Beispiel bei einem $M_A$ = 52 Nm und einer Leistung von 10 KW bei n = 0 U/min und einer Verstärkung des Magnetverstärkers von etwa 715 ( zum Beispiel 1000 eines rein spannungssteuernden Magnetverstärkers kann ja wegen der auch stromsteuernden Wirkung nicht erreicht werden ) ca. 14 Watt. Der Transistorverstärker wurde auf 50 W ausgelegt. Die Leistung des Potentiometers beträgt dann etwa 280 mW und die Gesamtverstärkung war 50 x 715 = 35.750-fach.

Vorstehendes gilt für die beschriebene tacholose Drehzahlsteuerung, d.h. , der Motor arbeitet vergleichsweise ähnlich wie ein Schleifringläufer mit Läuferstellwiderständen. Diese, ein Höchstmaß an Einfachheit und Sicherheit bietende Steuerung, kann durch einen Techoanbau am Motor in eine Regelung umgewandelt werden, wobei zu bedenken ist, daß hierzu wieder vorteilhaft eine Elektronikschaltung eingesetzt wird. Falls dies nicht wünschenswert wäre, kann ein " regelähnlicher" Betrieb auch mittels Schützschaltung (z.B. Abbremsen durch reversieren) erzielt werden, da dies wegen der natürlichen längeren Anlaufzeiten bei Drehwerken von bis zu mehreren Sekunden akzeptiert werden kann und der Motor selbst ausreichend stoßfrei arbeitet, auch bei Drehrichtungsumkehr aus voller Drehzahl heraus.

2081

0146818

Eine Prinzipschaltung mit Schützsteuerung ist in der Fig. 13 dargestellt. Am Stellglied 13 ist hier in einer für die Umpolung des Motors 14 vorgesehenen besonderen Stellung ein Schaltkontakt 15 angebracht, durch den bei Erreichen der besonderen Stellung eine Schutzschaltung 16 zum Beispiel mit einem Wendeschütz und über dieses gegebenenfalls zusätzlich eine Bremsvorrichtung 17 eingeschaltet wird, um zum Bei-spiel eine schnelle Stillsetzung des Motors 14 oder ein schnelles zügiges Abbremsen desselben zu er-zielen.

- 17 -

0146818

HOLEC GmbH

Rheinstr. 32

6100 Darmstadt

Magnetverstärker und Schaltung zur Drehzahlsteuerung

oder -regelung von Motoren und Verwendung derselben

Patentansprüche:

1. In Selbstsättigungsspannung betreibbarer Magnetverstärker zur Drehzahlsteuerung oder -regelung von
Motoren mit wenigstens annähernd dreieckiger Drehmomentkennlinie $M_d = f(n)$, insbesondere Mehrphasenmotoren
mit Widerstandsläufer, d a d u r c h  g e k e n n -
z e i c h n e t, daß der ferromagnetische Kern (4)
einen ersten Kernteil (7) mit einem zur Selbstsättigung
ausreichend kleinem magnetischen Widerstand (Luftspalt
(9')) und einen zweiten Kernteil (8) mit größerem, zur
Selbstsättigung nicht ausreichenden magnetischen Widerstand (Kernluftspalt (9)) aufweist.

2. Magnetverstärker nach Anspruch 1, d a d u r c h
g e k e n n z e i c h n e t , daß der ferromagnetische
Kern (4) aus Blechen (5) mit gleichgroßen Luftspalt
(6) besteht und daß der erste Kernteil (7) überlappend
und der zweite Kernteil (8) nicht überlappend geschichtet ist.

2081

3. Magnetverstärker nach Anspruch 1, d a d u r c h g e k e n n z e i c h n e t , daß der ferromagnetische Kern (4) aus wenigstens zwei unterschiedlichen Blechen (5',5" ) mit voneinander unterschiedlich großen Luftspalten (9,9') besteht und daß zumindest die den zweiten Kernteil (8) bildenden Bleche (5") mit dem größeren Luftspalt (9) nicht überlappend geschichtet sind.

4. Magnetverstärker nach einem der Ansprüche 1 bis 3, d a d u r c h g e k e n n z e i c h n e t, daß der Luftspalt (9) des zweiten Kernteils (8) bzw. der Eisenbleche (5") desselben eine Breite von 0,5 bis 3 mm, insbesondere 0,5 bis 2mm aufweist.

5. Magnetverstärker nach einem der Ansprüche 1 bis 4, d a d u r c h g e k e n n z e i c h n e t, daß der Anteil des ersten Kernteils (7) zum zweiten Kernteil (8) 65 bis 90 : 35 bis 10 beträgt.

6. Magnetverstärker nach einem der Ansprüche 1 bis 5, d a d u r c h g e k e n n z e i c h n e t, daß zwischen dem ersten Kernteil (7) und dem zweiten Kernteil (8) eine nicht ferromagnetische Trennplatte (18) vorgesehen ist.

7. Magnetverstärker nach Anspruch 6, d a d u r c h g e k e n n z e i c h n e t , daß die Trennplatte (18) aus Metall , insbesondere Aluminium oder Kupfer, besteht.

8. Magnetverstärker nach Anspruch 6 oder 7, d a d u r c h g e k e n n z e i c h n e t , daß die Trennplatte eine Dicke von 0,5 bis 2 mm aufweist.

9. Schaltung zur Drehzahlsteuerun oder-regelung von Motoren mit wenigstens annähernd dreieckiger Drehmomentkennlinie $M_d = f(n)$, insbesondere Motoren mit

2081

- 19 -

0146818

Widerstandsläufer mittels eines Magnetverstärkers, nach einem der Ansprüche 1 bis 8, d a d u r c h   g e k e n n - z e i c h n e t, daß der Motor (14) durch den Läuferwiderstand eine im wesentlichen dreieckige Drehmoment- kennlinie $M_d = f(n)$ aufweist und jede Netzphase (R,S,T) über einen einphasigen Magnetverstärker (111,112,113 ), bestehend aus je zwei antiparallel geschalteten Regeldrosseln (1,2) mit einer gemeinsamen oder zwei gleich- sinnig geschalteten Steuerwicklungen (3) sowie je einer in jede Leitung einer Regeldrossel (1,2) eingeschalteten Diode (D), an den entsprechenden Motoreingang ( U,V,W) angeschlossen ist, wobei jeweils die Dioden (D) von zwei antiparallel geschalteten Regeldrosseln (1,2 ) antiparallel. zueinander liegen, daß die Steuerwicklungen (3) an einen Ausgang eines gemeinsamen elektronischen Steuergliedes ( 12 ) gelegt sind, welches am Ausgang einen einer einstellbaren und gegebenenfalls umpolbaren Steuergleichspannung entsprechenden Steuer- gleichstrom ($I_G$ ) abgibt, und daß der Luftspalt (9) des zweiten Kernteils (8) und der Anteil desselben am gesamten ferromagnetischen Kern (4) jeder Regeldrossel (1,2) der Magnetverstärker (111,112,113) derart bemessen ist, daß die negative Steigung der Drehmomentkennlinie ($M_d = f(n)$) des Motors (14) in der Anlaufphase stark gesenkt wird oder bis zu nahezu waagrecht verläuft.

10. Schaltung nach Anspruch 9, d a d u r c h   g e - k e n n z e i c h n e t, daß die Drehmomentkennlinie ($M_d = f(n)$) in der Anlaufphase immer eine negative Steigung besitzt.

11. Schaltung nach Anspruch 9.oder 10, d a d u r c h   g e k e n n z e i c h n e t, daß das Steuerglied (12) ein Transistorverstärker ist.

12. Schaltung nach Anspruch 11, d a d u r c h   g e - k e n n z e i c h n e t, daß die Verstärkung des Transistorverstärkers (12) über einen Einstellwiderstand als Stellglied (13) einstellbar ist.

13. Schaltung nach Anspruch 11 oder 12, d a d u r c h
g e k e n n z e i c h n e t , daß die Verstärkung und
gegebenenfalls eine Steuerspannungsumkehr über ein
Potentiometer (13) verstellbar bzw. schaltbar ist.

14. Schaltung nach einem der Ansprüche 9 bis 13, d a -
d u r c h g e k e n n z e i c h n e t , daß zwischen
Motor (14) und Magnetverstärker (11; 111, 112, 113) eine
Schützschaltung (16) mit Wendeschütz eingeschaltet ist,
daß das Stellglied (13) des Steuergliedes (12) in einer
besonderen Stellung einen Schaltkontakt (15) aufweist und
über diesen die Umschaltung des Wendeschützes der Schützschaltung (16) bei Erreichen dieser besonderen Stellung
des Stellgliedes (13) erfolgt.

15. Schaltung nach Anspruch 14, d a d u r c h g e -
k e n n z e i c h n e t , daß mit der Umschaltung des
Wendeschützes der Schützschaltung (16) eine Bremsvorrichtung (17) eingeschaltet oder ausgelöst wird.

16. Verwendung eines Magnetverstärkers (11; 111, 112,
113) nach einem der Ansprüche 1 bis 8, eines Motors (14)
mit annähernd dreieckiger Drehmomentkennlinie ($M_d=f(n)$)
und einer Schaltung nach einem der Ansprüche 9 bis 15
zum sanften, drehschwingungsfreien oder -armen Anlauf
und Betrieb von Drehwerken und/oder Fahrwerken.

2081

0146818

Fig.1

Fig.2

Fig.3

Fig.4

Fig.5

Fig.6

0146818

Fig.7

Fig.8

Fig.9

Fig.10

Fig.11

0146818

**Fig.12**

**Fig.13**